# EUROPEAN PATENT APPLICATION

(11) **EP 4 674 757 A1**
(43) Date of publication of application: **07.01.2026**
(21) Application number: 24461592.8
(22) Date of filing: 05.07.2024
(51) Int. Cl.: B64D 11/06, B60N 2/015

(54) **MOUNTING FITTING**

(71) Applicant: B/E Aerospace Inc., Winston Salem, NC 27105 (US)
(72) Inventor: KALISZCZYK, Piotr Krzysztof, 51-317 Wroclaw (PL); CHODYNIECKI, Marcin Adam, 51-317 Wroc aw (PL); KOLODZIEJCZAK, Marcin Szymon, 51-317 Wroclaw (PL)
(74) Representative: Dehns

(57) **Abstract**

A mounting fitting for mounting an object to a surface and releasably locking the object in one or more positions relative to the surface, the mounting fitting comprising an elongate fitting body (10) comprising a first portion (11) configured to be attached to the object, in use, and a second portion (12) having a locking mechanism (30) configured to releasably lock the fitting relative to the surface, in use, wherein the locking mechanism comprises a rotatable knob (13) having an elongate protrusion (132) extending therefrom and a spring mechanism (24, 25) mounted within a spring mechanism housing (20) mounted within the knob (13), wherein the spring mechanism is biased to engage the knob (13) to the spring mechanism housing (20), and wherein application of a twisting force to the knob rotates the knob against the force of the spring mechanism relative to the spring mechanism housing to change the orientation of the protrusion (132) relative to the fitting body (10).

## Description

### TECHNICAL FIELD

The present disclosure concerns fittings for mounting items to a floor or other platform, such as, but not exclusively, for mounting a seat in a vehicle or aircraft.

### BACKGROUND

There is, in many applications, a need to removably mount and secure an item to a platform or floor. In some situations, it may be desired to mount the object at different positions according to circumstances. One example, is seating used in vehicles or aircraft, including helicopters. Seats are typically mounted to the floor or platform of the vehicle/aircraft using a fitting attached to a lower part of the seat which slide into and are secured in tracks provided on the floor/platform. The fittings and tracks may be configured to allow sliding movement of the seat along the track to an appropriate position where the fitting may be releasably locked relative to the track to secure the seat at the required position along the track. Such tracks are usually arranged to align with/extend longitudinally to or be orthogonal to/extend laterally to the direction of motion - i.e. the driving or flight direction. Typically, the fitting is locked in position relative to the track by means of fasteners such as screws or bolts or other fasteners. In some applications, it may be necessary to change the position or configuration of the seats e.g. in a helicopter during a rescue operation. Such locking systems require a number of additional fastener parts (the screws etc.) and also require time and labour and tools to fasten and then unfasten, if the seats need to be adjusted or reconfigured, the fitting. Such mechanisms cannot usually be easily locked or unlocked during flight. There is a desire for an improved mounting system that simplifies mounting and releasable locking in position, an object to a platform (which, hereinafter, includes a floor).

### SUMMARY

Accordingly, there is provided a mounting fitting for mounting an object to a surface and releasably locking the object in one or more positions relative to the surface, the mounting fitting comprising an elongate fitting body comprising a first portion configured to be attached to the object, in use, and a second portion having a locking mechanism configured to releasably lock the fitting relative to the surface, in use, wherein the locking mechanism comprises a rotatable knob having an elongate protrusion extending therefrom and a spring mechanism mounted within a spring mechanism housing mounted within the knob, wherein the spring mechanism is biased to engage the knob to the spring mechanism housing, and wherein application of a twisting force to the knob rotates the knob against the force of the spring mechanism relative to the spring mechanism housing to change the orientation of the protrusion relative to the fitting body.

In an example, the spring mechanism comprises a bearing ball biased relative to the housing by a spring.

The housing may have two or more holes (in the example shown - four) therethrough and the ball may be biased by the spring to extend through one of said holes. Two or more recesses may be formed in an inner surface of the knob, wherein the ball secures in a one of the recesses when the hole and the recess are aligned.

The spring mechanism housing may secured to the fitting e.g. by a screw, so as not to rotate relative thereto.

In embodiments, the first portion comprises means for attachment to the object, in use. The means for attachment may comprise a hole through the first portion.

In embodiments, the first portion is configured to be attached to a vehicle seat and the locking mechanism is configured to releasably lock to a track on a floor or platform.

The fitting may be used to mount a vehicle seat such as an aircraft seat to a floor or platform.

### BRIEF DESCRIPTION

Examples of the mounting fitting according to this disclosure will now be described with reference to the drawings. It should be noted that these are examples only and variations are possible within the scope of the claims. In particular (but not only) the examples are described with reference to mounting a vehicle/aircraft seat to a floor or platform, but it is feasible that the mounting system of this disclosure could also be used for mounting other objects to a floor or platform or similar surface.
Figure 1 shows an example of a mounting fitting according to this disclosure.
Figure 2 shows the fitting of Fig. 1 in a first (locked) state.
Figure 3 shows the fitting of Fig. 1 in a second (unlocked) state.
Figure 4 is an exploded view of the fitting shown in the previous figures.
Figure 5 is a top view of a fitting.
Figure 6 is a side section view of a fitting.
Figure 7 is a top view of a fitting in the locked state.
Figure 8 is a top view of a fitting in the unlocked state.
Figure 9 is a front view of a fitting as previously depicted.

### DETAILED DESCRIPTION

As mentioned above, there is often a need for an object to be mounted to a surface or platform in different positions. An example is an aircraft seat mounted to the floor/platform of the aircraft. It is sometimes desired to mount the seat at a particular position on a floor or platform and at other times to reconfigure/re-position the seat to a different position. To mount such seats, typically, rails or tracks are provided on the floor or platform and a fitting is provided to be attached to the seat, on one side, and to locate in the track on the other side. The seat will be mounted at a desired position on the track (selected for safety/comfort of the user and/or to allow seat configurations suitable to the circumstances, by locating the fitting in the track and then securing the fitting relative to the track at the desired position. This is typically done by means of fasteners such as screws or bolts. If the seat is then to be re-positioned. The fitting needs to be released/unlocked by undoing the fasteners so that the seat/fitting can be re-positioned along the track and re-fastened at the new position. This locking and unlocking requires the use of separate fasteners and tools and is time and labour intensive, and cannot be, or at least cannot easily be unlocked during flight.

The mounting system according to this disclosure provides a quick-release fitting to be used that incorporates a locking mechanism so that the fitting can be easily locked and unlocked relative to the track by means of a simple twist knob forming part of the fitting. In this way, the mounting position of the seat along to the track can be easily varied by twisting the knob of the fitting.

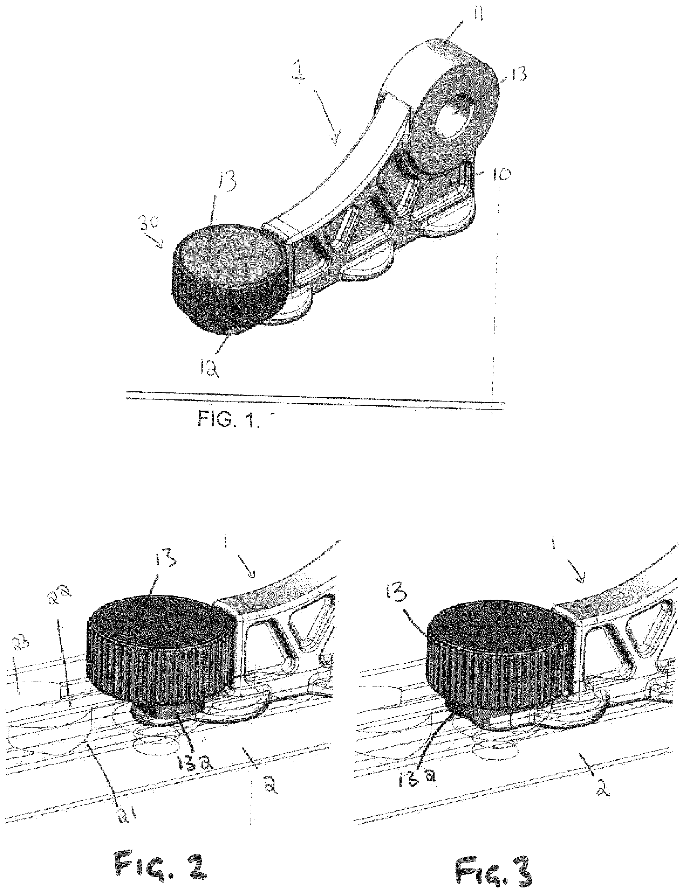

An example of the mounting fitting 1 of this disclosure is shown in Figs. 1 to 3. As will be further described below, with reference to Figs 2 and 3, the fitting 1 is configured to be mounted in a track 2. The track 2 is a linear track arranged and secured in a given orientation on a floor or platform, the track having a track body 21 and a track groove 22 running along the track body and configured to receive the mounting system 1. The groove 22 in the track may be a simple linear groove along which the mounting system can slide. The groove 22 may, however, be provided with discrete locking portions where the mounting fitting can be secured to the track. For example, the track may have discrete wider portions 23 along the groove with which the locking mechanism of the fitting (described further below) can engage so that the mounting fitting can be secured relative to the track.

The mounting fitting 1, shown in the figures, comprises an elongate fitting body 10 comprising, at one end, a first portion 11 configured to be fixed to the seat or other object to be mounted and, at the other end, a second portion 12 comprising a quick-release locking mechanism 30 (described further below) for releasably locking the fitting to the track 2 in use. The first and second portions can be formed integrally or as two separate portions attached together to form the fitting body.

In the example shown, the first portion 11 is in the form of a flange or bracket or other fitting, shaped or configured to be connected to the seat. In the example shown, the first portion is provided with a hole 13 therethrough. This can be connected to the seat e.g. by a bolt or other fastener.

The second portion 12 forms the locking mechanism 30 and comprises a housing twist knob 13 and locking components which will be described further below. The knob 13 and the flange 11 extend from the opposite, upper parts of the body 10.

The locking mechanism 30 is designed (as described further below) such that when the knob is twisted or rotated relative to the housing fitting body 10, the locking mechanism locks to the track to prevent further sliding movement of the fitting relative to the track (as shown in Fig. 2). When the knob 13 is in its default rotary position relative to the housing (e.g. as shown in Fig. 3) the fitting is not locked relative to the track and is free to slide along the track. When installing the fitting, for example, it will be mounted to the track in this configuration. The knob is configured to assume the locking position when a twisting force is applied to twist the knob e.g. by the finger or thumb of a user. To release the knob to the unlocked position, the knob is further twisted. When unlocked, the fitting 1 can be moved along the track 2 and then locked in the new position by a simple twist motion of the knob 13. Further rotation of the knob releases the locking mechanism so that the seat can be moved along the track to a different position.

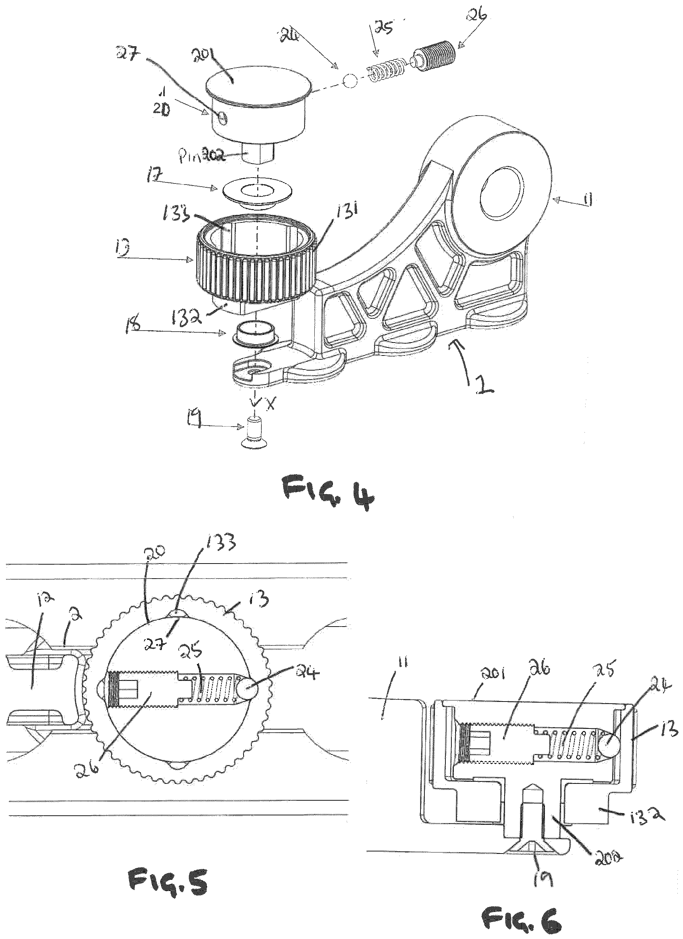

The component parts of the locking mechanism will now be described further with reference to Figs. 4 to 9.

The fitting 1 comprises the knob 13 which is mounted to the second end 12 of the fitting body 10 such that it can rotate relative to the body about an axis of rotation X which is substantially perpendicular to the length of the body defined from the first end to the second end. The knob 13 may have a standard circular or ovate cross section and may have a roughened outer surface 131 or an outer surface provided with some surface feature to improve grip of the knob 13 by a user. In other examples, though, the outer surface of the knob can be smooth. Other forms and configurations of knob are possible provided it can be rotated or twisted relative to the fitting by a hand of a user. The bottom of the knob 13 has an elongate protrusion 132 shaped to fit onto the rail 2.

The locking mechanism 30 further comprises a spring mechanism which may be mounted in a housing 20 which, in turn, fits within the knob 13. In the example shown, the top 201 of housing 20 of the spring mechanism forms the upper surface of the knob 13.

A pin 202 extends down from the bottom of the housing 20 and, when assembled, this passes through the elongate protrusion 132 into the track groove 21.

Bushings 17, 18 may be provided around the pin 202.

The spring mechanism housing may be secured to the fitting body 10 by e.g. a screw (here, a countersunk screw 19 inserted from below).

The spring mechanism comprises a spring 25 and a bearing ball 24 fitted into the housing 20 as described further below. The spring mechanism may be adjustable e.g. by means of a set screw 26.

The spring mechanism housing 20 is provided with two or more holes 27 through which the bearing ball 24 can protrude under the force of the spring 25, and the inner surface of the knob 13 is provided with corresponding recesses 133. In the example shown, there are four holes 27 separated around the housing by 90 degrees, and correspondingly positioned recesses 133. This enables the locked and unlocked positions to be reached regardless of the direction of rotation of the knob 13. In other examples, there may be fewer, e.g. two (or even more) holes/recesses.

The shape of the connected elements of the locking mechanism 30 prevents the whole mechanism, rather than just the knob 13 rotating, in use.

The arrangement of the locking components in the knob 13 can be best seen in the top view of Fig. 5 and the side section view of Fig. 6.

The spring (here compression spring) 25 is pre-tensioned to push the bearing ball 24 to protrude through a hole in the housing and into a corresponding recess 133 in the knob 13. The mechanism can be unlocked by rotation of the knob 13 by a user, the twisting force causing the recess 133 to ride over the ball 24, forcing the ball 24 inwards against the force of the spring 25. When the knob 13 reaches a position of rotation where the ball 24 is aligned with another recess 133, the ball moves into the recess under the force of the spring 25 to lock rotation of the knob 13.

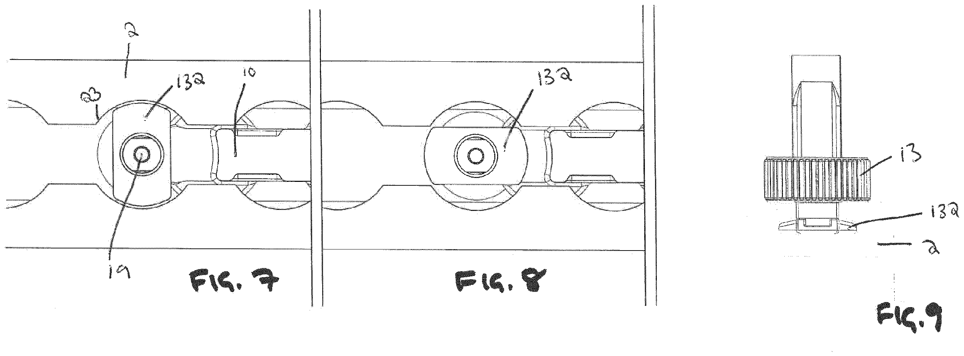

Fig. 7 shows the assembly with the knob rotated to a locked position. Here, the elongate protrusion 132 is orientated relative to the rail 2 (or, in this example, the widened part 23 of the rail) such that the protrusion 132 is retained in the widened portion 132 and prevented from further movement along the rail. In the example shown, the retention is due to the protrusion having an elongate rectangular shape that, in its long dimension, is longer than the width of the rail groove at locations between the widened portions. For example, the length of the protrusion 132 is substantially the same as the diameter of the widened portion 23. Therefore, the protrusion, in this orientation, cannot move past the widened portion.

Other configurations can be envisaged in which the protrusion 132 from the bottom of the know (which rotates with the knob 13) is, in a first orientation, retained relative to the rail or the rail groove to prevent movement along the rail.

To unlock the mechanism, all that the user needs to do is apply a manual twisting force to the knob 13 to rotate the knob 13 relative to the fitting 1 and the rail 2. Because the spring mechanism housing 20 is fixed relative to the fitting body it does not rotate and so the knob 13 rotates relative to the spring mechanism housing and the spring mechanism. The twisting force causes the know 13 to ride over the ball 24, the recess therefore moving away from the ball and the surface of the knob between recesses forcing the ball against the force of the spring 25, allowing the knob to rotate over the spring mechanism. Rotation of the knob by, in this case, 90 degrees from the locked position of Fig. 7 to the position of Fig. 8, results in the ball 24 aligning with another recess 133. At this position, the orientation of the protrusion 132 of the knob 13 is rotated 90 degrees from the locked orientation, relative to the rail 2 (or rail groove 22). The dimension and shape of the protrusion 132 are such that in this orientation, the protrusion 132 can move along the rail/rail groove 22 this allowing the fitting 1 to also move along the rail 2.

As best seen in Fig. 9, the width dimension of the protrusion 132 should be slightly narrower than the width of the rail groove 22 to enable the protrusion (and, hence, the know and the fitting) to move along the track groove.

The force required to twist the knob is determined by the strength of the spring 25. The resistance at which the mechanism operates can be adjusted by making the spring of material of different stiffness. The pre-tension of the spring can be adjusted e.g. by means of a set screw 26.

The fitting can, as seen, for example, in Fig. 1, have a simple, compact and lightweight design but its rigid body allows easy adaptation to the design of the seat.

The compact quick-release mechanism allows the seat to be repositioned along the rail quickly and easily without the use of tools.

## Claims

1. A mounting fitting for mounting an object to a surface and releasably locking the object in one or more positions relative to the surface, the mounting fitting comprising an elongate fitting body (10) comprising a first portion (11) configured to be attached to the object, in use, and a second portion (12) having a locking mechanism (30) configured to releasably lock the fitting relative to the surface, in use, wherein the locking mechanism comprises a rotatable knob (13) having an elongate protrusion (132) extending therefrom and a spring mechanism (24, 25) mounted within a spring mechanism housing (20) mounted within the knob (13), wherein the spring mechanism is biased to engage the knob (13) to the spring mechanism housing (20), and wherein application of a twisting force to the knob rotates the knob against the force of the spring mechanism relative to the spring mechanism housing to change the orientation of the protrusion (132) relative to the fitting body (10).

2. The mounting fitting of claim 1, wherein the spring mechanism comprises a bearing ball (24) biased relative to the housing (20) by a spring (25).

3. The mounting fitting of claim 2, wherein housing (20) has two or more holes (27) therethrough and the ball (24) is biased by the spring (25) to extend through one of said holes (27).

4. The mounting fitting of Claim 3, wherein two or more recesses (133) are formed in an inner surface of the knob (13), wherein the ball (24) secures in a one of the recesses when the hole and the recess are aligned.

5. The mounting fitting of any preceding claim, wherein the spring mechanism housing is secured to the fitting so as not to rotate relative thereto.

6. The mounting fitting of claim 5, wherein the spring mechanism housing (20) is secured to the fitting body (10) by a screw (19).

7. The mounting fitting of any preceding claim, further comprising one or more bushings (17, 18) between the spring mechanism housing (20) and the knob (13) and/or the fitting body (10).

8. The mounting fitting of any preceding claim, wherein the spring mechanism further comprises an adjustment screw (26).

9. The mounting fitting of any preceding claim, wherein the protrusion (132) has a rectangular shape.

10. The mounting fitting of claim 3 or any claim dependent thereon, comprising four holes (27) spaced 90 degrees apart around the spring mechanism housing (20).

11. The mounting fitting of any preceding claim, wherein the first portion comprises means for attachment to the object, in use.

12. The mounting fitting of claim 11, wherein the means for attachment comprises a hole (13) through the first portion.

13. The mounting fitting of any preceding claim, wherein the second portion (12) comprises means for attachment to the surface, in use.

14. The mounting fitting of any preceding claim, wherein the first portion (11) is configured to be attached to a vehicle seat and the locking mechanism (30) is configured to releasably lock to a track (2) on a floor or platform.

15. A vehicle seat system comprising a seat, and a floor track (2) arranged on a floor or platform of the vehicle, and a mounting fitting of any preceding claim wherein the first portion is attached to the seat and the second portion is attached to the track, and wherein the position of the seat relative to the track is releasably locked by the locking mechanism.
